Europäisches Patentamt

European Patent Office

Office européen des brevets

(11) Veröffentlichungsnummer : **0 213 068**
**B1**

(12) # EUROPÄISCHE PATENTSCHRIFT

(45) Veröffentlichungstag der Patentschrift :
28.09.88

(21) Anmeldenummer : 86810247.6

(22) Anmeldetag : 06.06.86

(51) Int. Cl.⁴ : **F 16 B 13/06, F 16 B 35/04**

(54) **Spreizanker.**

(30) Priorität : 15.07.85 DE 3525244

(43) Veröffentlichungstag der Anmeldung :
04.03.87 Patentblatt 87/10

(45) Bekanntmachung des Hinweises auf die Patenterteilung : 28.09.88 Patentblatt 88/39

(84) Benannte Vertragsstaaten :
CH DE FR GB LI

(56) Entgegenhaltungen :
EP-A- 0 059 825
FR-A- 957 208
US-A- 1 858 733

(73) Patentinhaber : HILTI Aktiengesellschaft
FL-9494 Schaan (LI)

(72) Erfinder : Schiefer, Erwin
Guardinistrasse 138/8
D-8000 München 70 (DE)

(74) Vertreter : Wildi, Roland
Hilti Aktiengesellschaft Patentabteilung
FL-9494 Schaan (LI)

## Beschreibung

Die Erfindung betrifft einen Spreizanker mit Ankerstange und Spreizhülse, wobei die Ankerstange setzrichtungsseitig einen kegeligen Spreizkopf zum Aufweiten der Spreizhülse, einen entgegen der Setzrichtung an den Spreizkopf anschliessenden zylindrischen Schaft, dessen Durchmesser dem kleinsten Durchmesser des Spreizkopfes entspricht, sowie einen an den Schaft entgegen der Setzrichtung anschliessenden, Lastangriffsmittel tragenden Bereich aufweist.

Spreizanker der voran beschriebenen Art zeichnen sich durch einfachen Aufbau und einfache Setzweise aus. Durch Ziehen der Ankerstange entgegen der Setzrichtung läuft der keglige Spreizkopf in die Spreizhülse ein, wodurch diese unter radialer Weitung gegen die Wandung eines Bohrloches verspannt wird.

Bei einem bekannten Spreizanker gemäss der EP-A-0 059 825 sind an der Ankerstange Lastangriffsmittel in Form eines Gewindes vorgesehen. Der das Gewinde tragende Bereich entspricht im Aussendurchmesser dem zylindrischen Schaft, der sich zwischen Spreizkopf und Bereicht mit Gewinde befindet.

Ausgehend vom Nenndurchmesser des Gewindes und der Zugfestigkeit des das Gewinde tragenden Bereichs ist die Ankerstange überdimensioniert, d. h. die Ankerstange erfordert bei der Herstellung einen unnütz hohen Materialaufwand. Der hohe Materialaufwand hat zudem ein hohes Gewicht des Spreizankers zur Folge.

Bei einem aus der FR-A-957 208 bekannten Befestigungselement ist der Schaft mit einem selbstschneidenden Gewinde versehen. Im Bereich dieses Gewindes ist der Querschnitt des Schaftes stark reduziert, so dass ausgehend von der Zugfestigkeit des übrigen Schaftbereiches das Befestigungselement im Bereich des Gewindes stark unterdimensioniert ist. Der unnütz hohe Materialaufwand ist demnach bei diesem Befestigungselement in den übrigen, nicht mit Gewinde versehenen Schaftbereich verlagert.

Der Erfindung liegt die Aufgabe zugrunde, einen einfach setzbaren, einen einfachen Aufbau aufweisenden sowie anforderungsgerecht dimensionierten Spreizanker mit Ankerstange und Spreizhülse zu schaffen, der eine Herstellung mit geringem Materialaufwand erlaubt.

Erfindungsgemäss wird die Aufgabe durch die kennzeichnenden Merkmale des Anspruches 1 gelöst.

Die Herstellung der vorzugsweise aus Metall bestehenden Ankerstange erfolgt zweckmässig durch Fliesspressen. Als Ausgangsmaterial dient ein zylindrischer Rohling mit dem Schaft entsprechendem Querschnitt. Der Spreizkopf wird durch Stauchen geformt; der das Aussengewinde tragende Bereich erhält seine Form durch radiale Verformung des Rohlings, wobei vorzugsweise parallel zur Schaftachse sich längserstreckende Vertiefungen eingeformt werden. Das Aussengewinde lässt sich auf der Aussenseite der sich dieserart ergebenden Vorsprünge aufrollen, wobei das Aussengewinde nur aus Bogenabschnitten besteht. Der reduzierte Traganteil des Aussengewindes kann in Kauf genommen werden, da das Bruchkriterium durch den Querschnitt des Schaftes bestimmt ist. Die Ankerstange des erfindungsgemässen Spreizankers kann so gegenüber bekannten Spreizankern mit einer Materialeinsparung von bis zu 50 % hergestellt werden.

Ein flächenmässig etwa dem Querschnitt des Schaftes entsprechender Kernquerschnitt des Bereichs mit Aussengewinde wird einfach dadurch erreicht, dass der durch die Vertiefungen verdrängte Materialteil zur Bildung der Vorsprünge radial nach aussen gedrängt wird. Durch die Flächengleichheit des Kernquerschnitts und des Querschnitts der Schaftes ist eine adäquate Tragfähigkeit des das Aussengewinde aufweisenden Bereichs gewährleistet.

In Weiterbildung der Erfindung entspricht der Aussendurchmesser des Aussengewindes dem 1,2- bis 1,7-fachen, vorzugsweise dem 1,5-fachen, des Schaftdurchmessers. Diese massliche Auslegung gewährleistet hohe Materialeinsparung und gleichzeitig hohe Tragfähigkeit des das Aussengewinde tragenden Bereichs.

Nach einem weiteren Vorschlag ist das Aussengewinde auf einer konzentrisch zur Schaftachse verlaufenden Kreisbogenfläche der Vorsprünge angeordnet. Das Gewinde setzt sich so aus relativ langen Bogenabschnitten zusammen, was einerseits zu hoher Tragfähigkeit des Aussengewindes beiträgt und andererseits das Ansetzen und Aufschrauben einer Mutter begünstigt.

Vorzugsweise erstreckt sich dabei das Aussengewinde auf den Vorsprüngen insgesamt über ein Bogenmass von 90 bis 200°, vorzugsweise 120 bis 180°.

Nach einem weiteren Vorschlag der Erfindung sind mindestens zwei, vorzugsweise drei Vorsprünge vorgesehen. Während das Anordnen von nur zwei Vorsprüngen insbesondere eine einfache Herstellung erlaubt, liegt der Vorteil des Anordnens von drei Vorsprüngen in einem besseren, weniger Verkantungsgefahr ausgesetzten Angriff der Mutter.

Vorzugsweise sind zwischen den Vorsprüngen sich parallel zur Schaftachse längserstreckende Hohlkehlen mit im Querschnitt konkavem Grund vorgesehen. Dieserart sind die Vorsprünge miteinander beigesteif verbunden, da durch den konkaven Grund der Hohlkehlen Kerbwirkung verhindert wird.

Die Spreizhülse kann beispielsweise durch noppenartige Anschlagmittel am Schaft gegen Verschieben entgegen der Setzrichtung arretiert werden. Ebenso ist es möglich, zur Erzielung einer diesbezüglichen Arretierung die Spreizhülse entgegen der Setzrichtung zu verlängern und an der aufzuschraubenden Mutter abzustützen, wobei die Spreizhülse entgegen der Setzrichtung beispielsweise Stützfinger aufweisen kann, die entlang des Aussengewindes versenkt in die Hohlkehlen ein greifen.

Die Erfindung wird nachstehend anhand einer Zeichnung, die ein Ausführungsbeispiel eines Spreizankers wiedergibt, näher erläutert. Es zeigen :

Fig. 1 einen ungespreizten Spreizanker im Längsschnitt ;

Fig. 2 einen Schnitt durch die Ankerstange des Spreizankers nach Fig. 1, gemäss Schnittverlauf II-II ;

Fig. 3 einen Schnitt durch eine weitere Ausführungsform einer Ankerstange, analog Schnittverlauf II-II in Fig. 1.

Der insgesamt mit 1 bezeichnete Spreizanker besteht aus einer insgesamt mit 2 bezeichneten Ankerstange, einer Spreizhülse 3, einer Beilegscheibe 4 und einer Mutter 5.

Die Ankerstange 2 besteht im wesentlichen aus einem kegeligen Spreizkopf 6, einem entgegen der Setzrichtung an diesen anschliessenden zylindrischen Schaft 7 und einem entgegen der Setzrichtung weisenden Bereich 8 mit Aussengewinde 9. Der Schaft 7 ist mit Noppen 11 versehen, die beim Einführen der Ankerstange 2 mit der Spreizhülse 3 in ein Bohrloch ein Verschieben der Spreizhülse 3 entgegen der Setzrichtung unterbinden.

Der Bereich 8 weist den Schaft 7 radial überragende Vorsprünge 12 auf, die durch Einformen von Hohlkehlen 13 und daraus folgender Materialverdrängung entstanden sind.

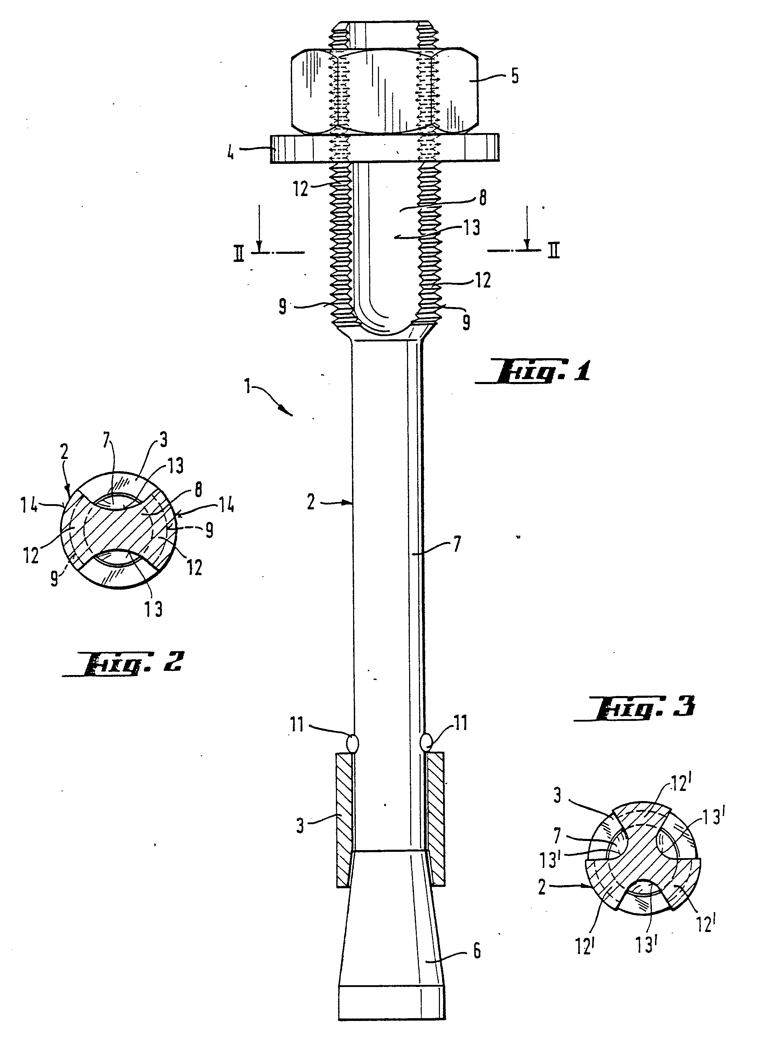

Die Fig. 2 zeigt die Ausbildung von zwei einander diametral gegenüberliegenden kongruenten Vorsprüngen 12. Deren Aussenkontur weist die Form einer Kreisbogenfläche 14 auf, in welche das Aussengewinde 9 eingeformt ist.

Die Fig. 3 zeigt eine Ausbildung mit drei Vorsprüngen 12', die wiederum durch Einformen von Hohlkehlen 13' entstanden sind.

## Patentansprüche

1. Spreizanker mit Ankerstange (2) und Spreizhülse (3), wobei die Ankerstange (2) setzrichtungsseitig einen kegeligen Spreizkopf (6) zum Aufweiten der Spreizhülse (3), einen entgegen der Setzrichtung an den Spreizkopf (6) anschliessenden zylindrischen Schaft (7), dessen Durchmesser dem kleinsten Durchmesser des Spreizkopfes (6) entspricht, sowie einen an den Schaft (7) entgegen der Setzrichtung anschliessenden, Lastangriffsmittel tragenden Bereich (8) aufweist, dadurch gekennzeichnet, dass der die Lastangriffsmittel tragende Bereich (8) mit einem flächenmässig dem Querschnitt des Schaftes (7) entsprechenden Kernquerschnitt versehen ist und den Schaft (7) radial überragende, über den Umfang gleichmässig verteilte, mit einem Aussengewinde (9) versehene Vorsprünge (12) aufweist.

2. Spreizanker nach Anspruch 1, dadurch gekennzeichnet, dass der Aussendurchmesser des Aussengewindes (9) dem 1,2- bis 1,7-fachen, vorzugsweise dem 1,5-fachen, des Schaftdurchmessers entspricht.

3. Spreizanker nach Anspruch 1 oder 2, dadurch gekennzeichnet, dass das Aussengewinde (9) auf einer konzentrisch zur Schaftachse verlaufenden Kreisbogenfläche (14) der Vorsprünge (12) angeordnet ist.

4. Spreizanker nach einem der Ansprüche 1 bis 3, dadurch gekennzeichnet, dass sich das Aussengewinde (9) auf den Vorsprüngen (12) insgesamt über ein Bogenmass 90° bis 200°, vorzugsweise 120° bis 180°, erstreckt.

5. Spreizanker nach einem der Ansprüche 1 bis 5, dadurch gekennzeichnet, dass mindestens zwei, vorzugsweise drei, Vorsprünge (12) vorgesehen sind.

6. Spreizanker nach einem der Ansprüche 1 bis 5, dadurch gekennzeichnet, dass zwischen den Vorsprüngen (12) sich parallel zur Schaftachse längserstreckende Hohlkehlen (13) mit im Querschnitt konkavem Grund vorgesehen sind.

## Claims

1. An expanding anchor having an anchor rod (2) and expansible sleeve (3), in which respect the anchor rod (2) has at the setting-direction side a conical expansion head (6) for the expansion of the expansible sleeve (3), a cylindrical shaft (7) which adjoins the expansion head (6) contrary to the setting direction and the diameter of which corresponds to the smallest diameter of the expansion head (6), as well as a region (8) which adjoins the shaft (7) contrary to the setting direction and which carries load-application means, characterised in that the region (8) carrying the load-application means is provided with a core cross-section corresponding areawise to the cross-section of the shaft (7) and has projections (12) which project radially beyond the shaft (7) and which are distributed uniformly over the circumference and which are provided with an external thread (9).

2. An expanding anchor according to claim 1, characterized in that the outside diameter of the external thread (9) corresponds to 1.2 up to 1.7 times, preferably to 1.5 times, the shaft diameter.

3. An expanding anchor according to claim 1 or 2, characterised in that the external thread (9) is arranged on a circular-arc surface (14) of the projections (12) which extends concentrically to the shaft axis.

4. An expanding anchor according to one of claims 1 to 3, characterised in that the external thread (9) on the projections (12) extends altogether over an arc measure of 90° up to 200°, preferably 120° up to 180°.

5. An expanding anchor according to one of claims 1 to 5, characterised in that at least two, preferably three, projections (12) are provided.

6. An expanding anchor according to one of claims 1 to 5, characterised in that channels (13) are provided between the projections (12) extending longitudinally parallel to the shaft axis and having a bottom which is concave in cross-section.

**Revendications**

1. Cheville à expansion avec tige d'ancrage (2) et douille d'expansion (3), la tige d'ancrage (2) comprenant, du côté dirigé dans le sens de l'enfoncement, une tête d'écartement conique (6) pour l'écartement de la douille d'expansion (3), une tige cylindrique (7) qui fait suite, dans le sens opposé à la direction d'enfoncement, à la tête d'écartement (6) et dont le diamètre correspond au plus petit diamètre de la tête d'écartement (6), ainsi qu'une zone (8) portant des moyens pour l'application de la charge qui fait suite à la tige (7), dans le sens opposé à la direction d'enfoncement, caractérisée en ce que la zone (8) qui porte les moyens pour l'application de la charge présente une section d'âme correspondant, en surface, à la section de la tige (7), et des saillies (12) qui dépassent radialement de la tige (7), sont réparties régulièrement sur la circonférence et munies d'un filetage extérieur (9).

2. Cheville à expansion selon la revendication 1, caractérisée en ce que le diamètre extérieur du filetage extérieur (9) correspond à 1,2 à 1,7 fois, de préférence à 1,5 fois, le diamètre de la tige.

3. Cheville à expansion selon l'une des revendications 1 ou 2, caractérisée en ce que le filetage extérieur (9) est disposé sur une surface en arc de cercle (14) des saillies (12) qui s'étend concentriquement à l'axe de la tige.

4. Cheville à expansion selon l'une quelconque des revendications 1 à 3, caractérisée en ce que le filetage extérieur (9) sur les saillies (12) s'étend au total sur un arc de 90° à 200°, de préférence de 120° à 180°.

5. Cheville à expansion selon l'une quelconque des revendications 1 à 4, caractérisée en ce que les saillies (12) sont prévues au moins au nombre de deux, de préférence au nombre de trois.

6. Cheville à expansion selon l'une quelconque des revendications 1 à 5, caractérisée en ce que des gorges longitudinales (13) s'étendant parallèlement à l'axe de la tige et présentant, en section, un fond concave, sont prévues entre les saillies (12).

0 213 068

Fig. 1

Fig. 2

Fig. 3